# EUROPEAN PATENT APPLICATION

(11) **EP 2 573 693 A2**
(43) Date of publication of application: **27.03.2013**
(21) Application number: 12185215.6
(22) Date of filing: 20.09.2012
(51) Int. Cl.: G06F 17/30

(54) **Associative memory technology in intelligence analysis and course of action development**

(30) Priority: 23.09.2011 US 201113243656
(71) Applicant: The Boeing Company, Chicago, IL 60606-2016 (US)
(72) Inventor: Arnold, William G., Jacksonville, FL 32217 (US); Warn, Brian, Seattle, WA 98115 (US)
(74) Representative: Witte, Weller & Partner

(57) **Abstract**

A system (100) for analyzing unstructured data. The system includes an associative memory (102) including a plurality of data (104) in associated units having a plurality of associations. The associative memory (102) is configured to be queried based on at least one relationship selected from the group that includes direct relationships (114) and indirect relationships (116) among the plurality of data (104). The associative memory (102) further includes a content-addressable structure (118). The system also includes an analyzer (122) in communication with the associative memory (102), wherein the analyzer (122) is configured to parse and arrange the plurality of data (104) into comparable units (124, 126, 128) in response to a query (120). The analyzer (122) is configured to establish an ordered list (130) ranking the comparable units (124, 126, 128) in an order of precedence based on the query (120). (Fig. 1)

## Description

### BACKGROUND INFORMATION

### Field:

The present disclosure relates generally to using vast stores of data in an associative memory to enable strategic planners to rapidly develop operational plans for the efficient use of available resources in view of one or more particular situations in a theater of operations.

### Background:

An operational plan is a set of actions or processes designed in part, or as a whole, to achieve a particular goal. For example, a military operational plan may be to capture and hold a city. A military operational plan may be more narrow, such as a plan for training a group of soldiers to have a particular set of skills. A military operational plan may be more broad, such as how to modernize an entire standing military, or how to coordinate multiple military branches to defeat an enemy country. Operational plans may also relate to civil organizations, such as large corporations, government agencies, or other types of organizations.

Modern military operational planners have new tools at their disposal for creating military operational plans. One of these new tools may be a vast number of pieces of information, also referred to as data, which may be used to carefully analyze past military actions in great detail and then craft operational plans accordingly. A "vast" number, as used herein, may refer to "at least thousands," though often military planners are tasked with sifting through millions, tens of millions, or even more than hundreds of millions of pieces of information.

The data or pieces of information may take the form of after-action reports, which may be unstructured free-text data submitted by military personnel on a periodic basis or after some kind of event, such as a battle or a patrol. Other types of data may also be present, such as audio, video, coded text, pictures, or other data types. Operational plans based on a vast plurality of data may be more effective than operational plans based on less data, because the increased number of data leads to more reliable conclusions. In other words, the higher the volume and relevance of data, the more dependable the knowledge derived from the data. That knowledge, however, comes at the expense of the time and effort required by a planner or analyst to wade through the data to develop the operational plan.

As mentioned above, after-action reports may be a valuable source of information for strategic planners. However, due to the high volume of reports and the often unstructured nature of the content, mining and extracting valuable information from the data may be tedious and time consuming. In some cases, mining and extracting valuable information from all of the data may be impractical if the data is sufficiently voluminous.

For example, it may be considered desirable for an analyst or planner to read through each and every report to find the information that is considered most pertinent or useful. Once each report has been read, collected information may be aggregated to determine common patterns, situations, and effective approaches for dealing with similar future events. This process takes time and, additionally, may require a degree of subject matter expertise in order to know what information is relevant and what information is not relevant. In some cases, the volume of data may render this process impractical.

### SUMMARY

The advantageous embodiments provide for a system for analyzing unstructured data. The system includes an associative memory including a plurality of data in associated units having a plurality of associations. The associative memory may be configured to be queried based on at least one relationship selected from the group that includes direct relationships and indirect relationships among the plurality of data. The associative memory further includes a content-addressable structure. The system also includes an analyzer in communication with the associative memory, wherein the analyzer is configured to parse and arrange the plurality of data into comparable units in response to a query. The analyzer may be configured to establish an ordered list ranking the comparable units in an order of precedence based on the query.

The system also may have the plurality of data including at least one of the unstructured data and free text after-action reports, and at least thousands of after-action reports (AARs) that each describe at least one of an operational situation and an operation effectiveness rating. Further, the analyzer may establish the ordered list to rank the AARs such that a highest ranking AAR is most similar to the query.

The system may also further include a display unit configured to display the ordered list as a dashboard, which may include a plurality of perspectives from which to understand the plurality of data. Also, the dashboard may be configured to highlight a first attribute in a particular set of attributes, wherein the first attribute indicates groups of data of highest relevance to the query.

The advantageous embodiments also provide for a device. The device includes a physical processor connected to a bus. The bus may be connected to an associative memory. The associative memory may be non-transitory. The associative memory includes a plurality of data having a plurality of associations. The plurality of data may be collected into associated units of data. The associative memory may be configured to be queried based on at least one relationship selected from the group that includes direct relationships and indirect relationships among the plurality of data. The associative memory further includes a content-addressable structure. The processor may be configured to parse and arrange the plurality of data into comparable units in response to a query. The processor may be further configured to establish an ordered list ranking of the comparable units in an order of precedence based on the query.

The advantageous embodiments also provide for a computer implemented method. The computer implemented method includes receiving a query at a processor. The computer implemented method includes processing the query using the processor in conjunction with an associative memory. The associative memory may be non-transitory. The associative memory includes a plurality of data having a plurality of associations. The plurality of data may be collected into associated units of data. The associative memory may be configured to be queried based on at least one relationship selected from the group that includes direct relationships and indirect relationships among the plurality of data. The associative memory further includes a content-addressable structure. The method further includes parsing and arranging the plurality of data using the processor into comparable units in response to the query. The method further includes establishing, with the processor, an ordered list ranking of the comparable units in an order of precedence based on the query.

The features, functions, and advantages can be achieved independently in various embodiments of the present disclosure or may be combined in yet other embodiments in which further details can be seen with reference to the following description and drawings.

### BRIEF DESCRIPTION OF THE DRAWINGS

The novel features believed characteristic of the advantageous embodiments are set forth in the appended claims. The advantageous embodiments, however, as well as a preferred mode of use, further objectives and advantages thereof will best be understood by reference to the following detailed description of an advantageous embodiment of the present disclosure when read in conjunction with the accompanying drawings, wherein:
Figure 1 is an illustration of a block diagram of a system for analyzing unstructured data in accordance with an advantageous embodiment;
Figure 2 is an illustration of a flowchart of processing data in accordance with an advantageous embodiment;
Figure 3 is an illustration of a block diagram of a single analyst preparing an operational plan in accordance with an advantageous embodiment;
Figure 4 is an illustration of a block diagram of multiple analysts preparing an operational plan in accordance with an advantageous embodiment;
Figure 5 is an illustration of a block diagram of an analyst using an associative memory to prepare an operational plan in accordance with an advantageous embodiment;
Figure 6 is an illustration of an exemplary screenshot of a dashboard for a system for analyzing unstructured data in accordance with an advantageous embodiment;
Figure 7 is an illustration of an exemplary screenshot of a dashboard for a system for analyzing unstructured data in accordance with an advantageous embodiment;
Figure 8 is an illustration of an exemplary screenshot of a dashboard for a system for analyzing unstructured data in accordance with an advantageous embodiment;
Figure 9 is an illustration of an exemplary screenshot of a dashboard for a system for analyzing unstructured data in accordance with an advantageous embodiment;
Figure 10 is an illustration of an exemplary screenshot of a dashboard for a system for analyzing unstructured data in accordance with an advantageous embodiment;
Figure 11 is an illustration of an exemplary screenshot of a dashboard for a system for analyzing unstructured data in accordance with an advantageous embodiment;
Figure 12 is an illustration of a data processing system, in accordance with an advantageous embodiment.

### DETAILED DESCRIPTION

The advantageous embodiments recognize and take into account that it may be impractical to perform manual processing of many free text after action reports as part of preparing a military operational plan. The advantageous embodiments also recognize and take into account that other types of data may be analyzed as part of preparing a military operational plan, and that analyzing all of the available data may be impractical on a desired time scale. Thus, the advantageous embodiments provide a mechanism for a user to quickly identify and evaluate data for the purpose of generating an operational plan. The advantageous embodiments have many other applications.

For example, the advantageous embodiments may take advantage of an associative memory as part of processing a large number of free text after action reports and possibly other kinds of data. The advantageous embodiments may take advantage of the associations stored in the associative memory to find relevant data and trends in the data quickly and efficiently, thereby increasing both the speed and accuracy of an evaluation. The evaluation may then be used to generate an operational plan. Stated differently, the advantageous embodiments may reduce the amount of time and effort used to aggregate and process data used to develop effective operational plans.

In a specific non-limiting advantageous embodiment, an analyst or planner may be tasked with developing an effective operational plan for the setup of a combat outpost in Afghanistan. In performing this task a planner may benefit greatly from knowing what had and had not worked in the past when setting up such a combat outpost. Fortunately, data relating to setting up combat outposts in Afghanistan exists in the form of "after-action reports" written by military personnel. The task of reading each report to extract and aggregate common scenarios, identify valuable lessons learned, and develop an effective operational plan is manually intensive, time consuming, and prone to human error. These disadvantages may increase with the amount of data to be reviewed.

However, the advantageous embodiments contemplate creating a specific associative memory by aggregating disparate data sources that are composed of valuable lessons learned from the theater of operations. The focus of this memory may be to remember entities, their attributes, and the associations and relationships relevant to operational conditions described in the sources, including after-action reports. By identifying the associations and relationships between entities using the associative memory, the analyst or planner may have the ability to uncover patterns and valuable nuggets of information that otherwise may not be discernible during a manual review process. Thus, the advantageous embodiments may leverage an associative memory to rapidly perform the same task it would take one or more analysts many hours to perform. This advantage may result in the recovery of valuable time for the human analyst or planner. This advantage may also reduce the tendency for human error and increase operational efficiency of human resources.

In an advantageous embodiment, a process may include querying the associative memory. The query may produce a result list of situations associated with the term(s) entered in the query. The returned list may be ordered or ranked by the situations that most closely relate to the query.

The advantageous embodiments may handle unstructured, free text data by breaking it down into recognizable and comparable units without limiting any data. The advantageous embodiments might not use reductive algorithms or rules like many other data mining techniques.

As used herein the term "associative memory" refers to a plurality of data and plurality of associations among the plurality of data. The data and associations may be stored in a non-transitory computer readable storage medium. The plurality of data may be collected into associated groups. The associative memory may be configured to be queried based on indirect relationships among plurality of data in addition to direct correlations among plurality of data. The associative memory may also be configured to be queried based on direct relationships, and combinations of direct and indirect relationships. The associative memory may be configured to map input patterns in the plurality of data to output patterns in the plurality of data.

Thus, the advantageous embodiments provide for an associative memory comprising a plurality of data and a plurality of associations among the plurality of data. The plurality of data is collected into associated groups. The associative memory is configured to be queried based on at least one relationship, selected from a group that includes direct and indirect relationships, among the plurality of data in addition to direct correlations among the plurality of data. Associative memory may also take the form of software. Thus, associative memory also may be considered a process by which information is collected into associated groups in the interest of gaining new insight based on relationships rather than direct correlation.

As used herein, a "perspective" may be a "point of view". With respect to an associative memory, a perspective may be a choice of a context for a particular aspect of a user's domain. As used herein, an "insert perspective" is a type of perspective that may be fed back into an associative memory, and which may be viewable from other perspectives as a possible resource.

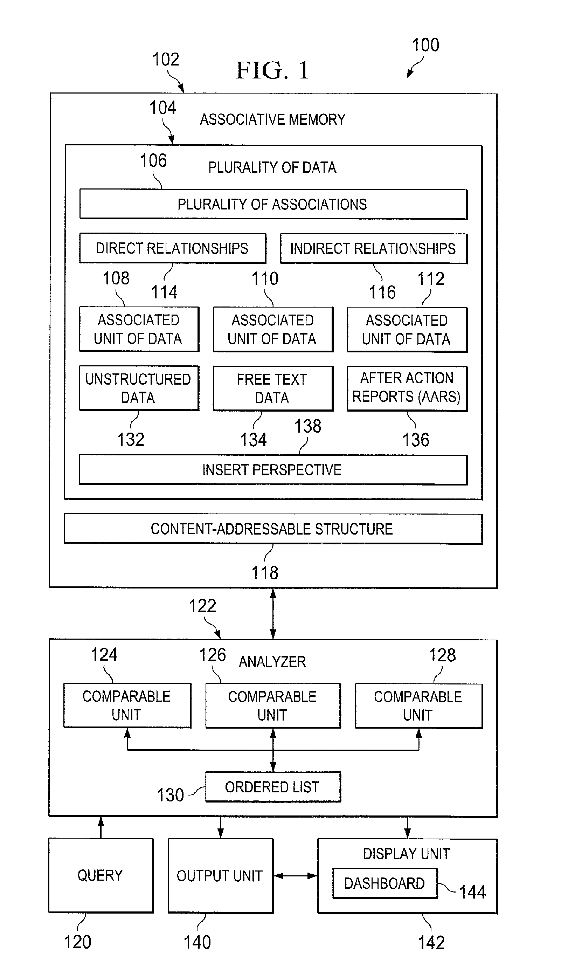

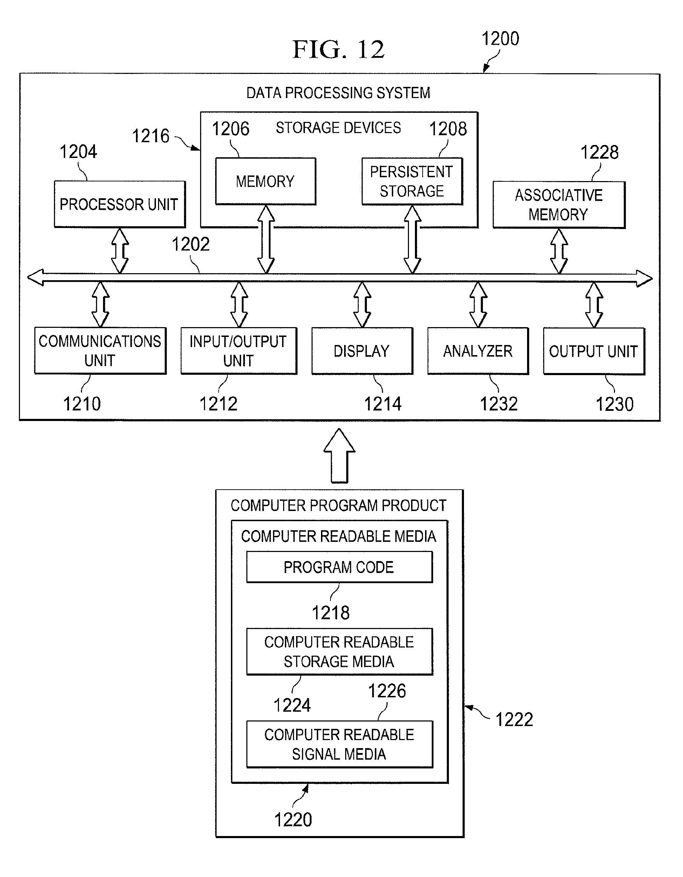

Figure 1 is an illustration of a block diagram of a system for analyzing unstructured data in accordance with an advantageous embodiment. System 100 shown in Figure 1 may be implemented using one or more data processing systems, possibly in a distributed or networked environment, and possibly by a group of remotely administered data processing systems known as the "cloud". Each of the one or more data processing systems that implement system 100 may be data processing system 1200 described with respect to Figure 12, or variations thereof. System 100 may be characterized as including one or more modules referenced by individual names. Each of these modules may be separate or part of a monolithic architecture. System 100 may take the form of hardware, software, or a combination thereof.

System 100 may be a system for analyzing unstructured data, but may also be a system for analyzing other kinds of data such as, but not limited to, structured data, video data, audio data, picture data, encrypted data, and many other kinds of data. System 100 may include an associative memory 102 including plurality of data 104 having plurality of associations 106. Plurality of data 104 may be collected into associated units of data such as, but not limited to, associated unit of data 108, associated unit of data 110, and/or associated unit of data 112. An associated unit of data may be two or more datum that are associated with each other in some manner. For example, two datum may be a name and a place associated with each other in that both the name and the place are associated with the same after-action report. This example in no way limits the associations among two or more datum, as many different examples are possible in many different types of contexts.

In an advantageous embodiment, associative memory 102 may be configured to be queried based on at least one relationship selected from the group that includes direct relationships 114 and indirect relationships 116 among plurality of data 104. An example of a direct relationship may be the example of an associated unit of data as described above. A direct relationship may also be a direct relationship between two associated units of data, such as between associated unit of data 108 and associated unit of data 110. An indirect relationship may exist when a direct relationship does not exist, but where data are indirectly connected. An example of an indirect relationship may be between associated unit of data 108 and associated unit of data 112, if associated unit of data 108 is directly related to associated unit of data 110 and also associated unit of data 110 is directly related to associated unit of data 112. Many other examples of direct and indirect relationships are possible.

In an advantageous embodiment, associative memory 102 further may include content-addressable structure 118. Content-addressable structure 118 provides associative memory 102 with the capability to be queried based on the content or plurality of data 104 itself, rather than on only addresses associated with the content or plurality of data 104. In an advantageous embodiment, content-addressable structure 118 may map input patterns in plurality of data 104 to output patterns in plurality of data 104.

System 100 may also include analyzer 122 in communication with associative memory 102. Analyzer 122 may take the form of hardware or software or a combination thereof. In response to query 120, analyzer 122 may be configured to parse and arrange plurality of data 104 into comparable units such as, but not limited to, comparable unit 124, comparable unit 126, and comparable unit 128. A comparable unit may be a unit of data, including any of associated unit of data 108, associated unit of data 110, or associated unit of data 112, that includes one or more datum. A comparable unit may be compared to other units of data for purposes of analyzing the relevance of data or groups of data to one another.

In an advantageous embodiment, analyzer 122 may be configured to establish ordered list 130 ranking the comparable units in an order of precedence based on query 120. For example, ordered list 130 may list the comparable units in an order of precedence based on relevance to query 120. In a specific example, query 120 may be related to determining what types of training are currently needed for a given military mission, and ordered list 130 may rank the comparable units according to which skill sets are currently in most need of additional training for the given military mission. In another advantageous embodiment, the order of precedence may be based on types of equipment needed according to a query that asks what equipment should be supplied to a given set of military units in the field. In another advantageous embodiment, the order of precedence may take the form of specifying which platoons of combat soldiers are most available for a mission, in terms of proximity to a target and relevant skills and equipment that the platoons have available for the mission. Many other advantageous embodiments may be envisioned, and the above examples do not limit the claimed inventions.

The advantageous embodiments described above may be further varied. For example, plurality of data 104 may include at least one of unstructured data 132 or free text data 134, though plurality of data 104 may include other data types. Free text data 134 may include one or more after-action reports 136, but may include many different types of free text data including news articles, intercepted enemy transmissions or captured data, other types of free text data, or other types of data generally. In an advantageous embodiment, analyzer 122 may be further configured to parse and arrange plurality of data 104 into the comparable units such that the comparable units are recognizable to a human user.

In an advantageous embodiment, analyzer 122 may be configured to establish ordered list 130 to rank a first comparable unit, such as comparable unit 124, to have a highest number of associations responsive to the query. However, in this particular advantageous embodiment, any of comparable unit 124, comparable unit 126, or comparable unit 128 may be the "first" comparable unit, so long as the comparable unit in question has the highest number of associations responsive to query 120.

In an advantageous embodiment, plurality of data 104 may include a vast amount of data. The term "vast" means "at least thousands" but may be much, much more, even in the tens of millions and beyond. In an advantageous embodiment, plurality of data 104 may include at least thousands of after-action reports (AARs) 136 that each describe at least one of an operational situation and an operation effectiveness rating. In an advantageous embodiment, an operational situation may be a particular battle, a strategic assessment, the results of a patrol, a logistical arrangement, and many other possible situations. In an advantageous embodiment, an operational effectiveness rating may be an evaluation of how effective a type of equipment has performed, the effectiveness of how a particular military unit has performed, the effectiveness of training, the effectiveness of an enemy, the effectiveness of a procedure, and many other examples. In any case, analyzer 122 may establish ordered list 130 to rank the AARs 136 such that a highest ranking AAR is most similar to query 120. In an advantageous embodiment, analyzer 122 may be configured to receive query 120 from insert perspective 138 of associative memory 102. Thus, while query 120 may be shown in Figure 1 as being apart from analyzer 122 and associative memory 102 in one advantageous embodiment, in other advantageous embodiments query 120 may be received from a user manipulating insert perspective 138 of associative memory 102.

In an advantageous embodiment, system 100 may include output unit 140. Output unit 140 may be configured to generate a set of links linking the comparable units to underlying data that compose the comparable units. Thus, ordered list 130 that is returned by analyzer 122 may include links to underlying data so that a user may find and review the sources of data used by system 100 to generate the list.

In an advantageous embodiment, system 100 may include display unit 142, which may be in communication with output unit 140. Display unit 142 may be configured to display ordered list 130 output by analyzer 122.

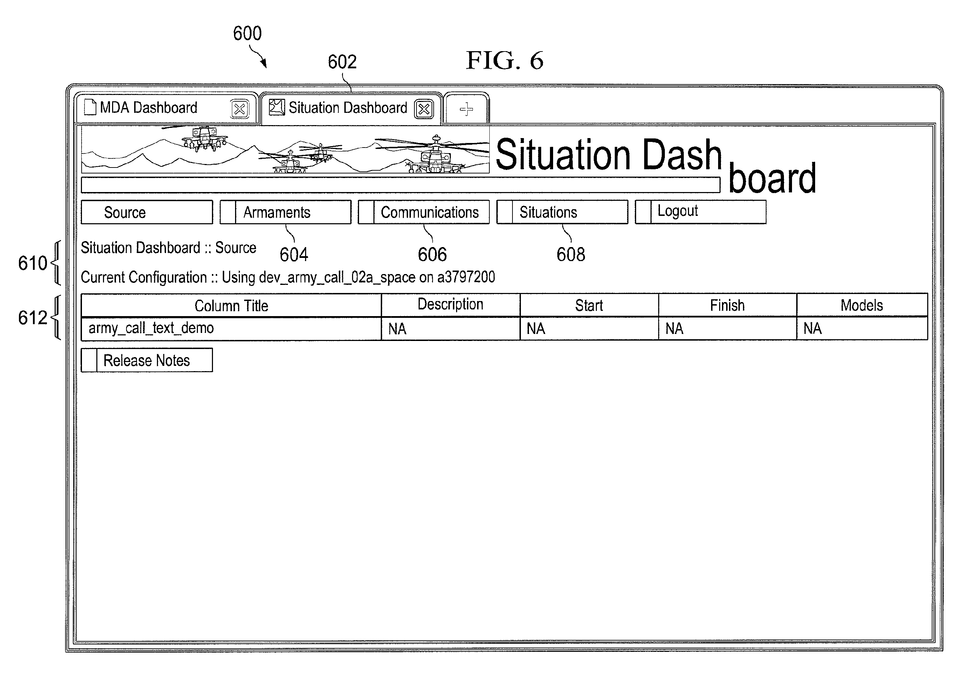

Additionally, output unit 140 may be further configured to cause display unit 142 to display ordered list 130 as dashboard 144. Examples of dashboard 144 are shown in Figure 6 through Figure 11. In an advantageous embodiment, dashboard 144 may include a plurality of perspectives from which to understand plurality of data 104. Examples of such a plurality of perspectives may be seen in Figure 6 through Figure 11.

In an advantageous embodiment, dashboard 144 may include a plurality of categories organized in a first column and a plurality of attributes organized in a second column. In this case, rows across the first column and the second column may include sets of attributes, in the plurality of attributes, which correspond to particular category entries in the plurality of categories. Both of these arrangements may be seen in Figure 6 through Figure 11.

In an advantageous embodiment, dashboard 144 may be configured to highlight a first attribute in a particular set of attributes. In this case, the first attribute may indicate groups of data of highest relevance to query 120.

The advantageous embodiments shown in Figure 1 are not meant to imply physical or architectural limitations to the manner in which different advantageous embodiments may be implemented. For example, system 100 may also operate with types of data other than unstructured data such as, but not limited to, structured data, video data, picture data, audio data, encrypted data, and other types of data. Other components in addition to and/or in place of the ones illustrated may be used. Some components may be unnecessary in some advantageous embodiments. Also, the blocks are presented to illustrate some functional components. One or more of these blocks may be combined and/or divided into different blocks when implemented in different advantageous embodiments.

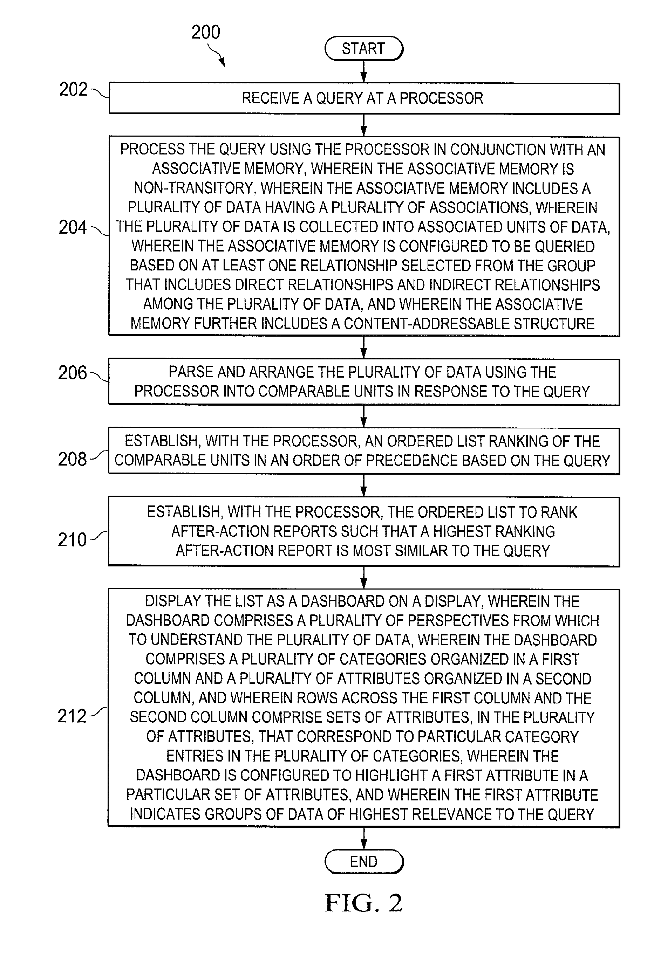

Figure 2 is an illustration of a flowchart of processing data in accordance with an advantageous embodiment. Process 200 shown in Figure 2 may be implemented in a module, system, or data processing system, such as system 100 of Figure 1 or data processing system 1200 of Figure 12. Process 200 described with respect to Figure 2 may be implemented in the form of a non-transitory computer readable storage medium storing computer readable code which, when implemented by a processor, may execute the method described with respect to Figure 2. While the operations of Figure 2 are described as being implemented by a "system," process 200 is not limited to being implemented by the systems of Figure 1 and Figure 12, but also may be implemented by one or more real or virtual data processing systems, possibly in a distributed or networked environment. Process 200 may be implemented using hardware, software, or a combination thereof. Although the operations described below for process 200 are presented as being performed by a processor, the operations described below may be performed by associative memory 102 of Figure 1, associative memory 1228 of Figure 12, analyzer 122 of Figure 2, processor unit 1204 of Figure 12, system 100 of Figure 1 or data processing system 1200 of Figure 12, or by any suitable software component, hardware component, or combinations thereof.

Process 200 begins as the system receives a query at a processor (operation 202). The processor then processes the query using the processor in conjunction with an associative memory, wherein the associative memory is non-transitory, wherein the associative memory includes a plurality of data having a plurality of associations, wherein the plurality of data is collected into associated units of data, wherein the associative memory is configured to be queried based on at least one relationship selected from the group that includes direct relationships and indirect relationships among the plurality of data, and wherein the associative memory further includes a content-addressable structure (operation 204).

The processor then parses and arranges the plurality of data into comparable units in response to the query (operation 206). The processor then establishes an ordered list ranking of the comparable units in an order of precedence based on the query (operation 208).

Optionally, when the plurality of data further includes at least thousands of after-action reports (AARs) that each describe at least one of an operational situation and an operation effectiveness rating, the processor may establish the ordered list to rank the after-action reports such that a highest ranking after-action report is most similar to the query (operation 210).

Optionally, the processor may display the list as a dashboard on a display, wherein the dashboard comprises a plurality of perspectives from which to understand the plurality of data, wherein the dashboard comprises a plurality of categories organized in a first column and a plurality of attributes organized in a second column, and wherein rows across the first column and the second column comprise sets of attributes, in the plurality of attributes, that correspond to particular category entries in the plurality of categories, wherein the dashboard is configured to highlight a first attribute in a particular set of attributes, and wherein the first attribute indicates groups of data of highest relevance to the query (operation 212). The process may terminate thereafter.

The advantageous embodiments shown in Figure 2 are not meant to imply physical or architectural limitations to the manner in which different advantageous embodiments may be implemented. Other operations in addition to and/or in place of the ones illustrated may be used. Some operations may be unnecessary in some advantageous embodiments. Also, the blocks are presented to illustrate some operations. One or more of these blocks may be combined and/or divided into different blocks when implemented in different advantageous embodiments.

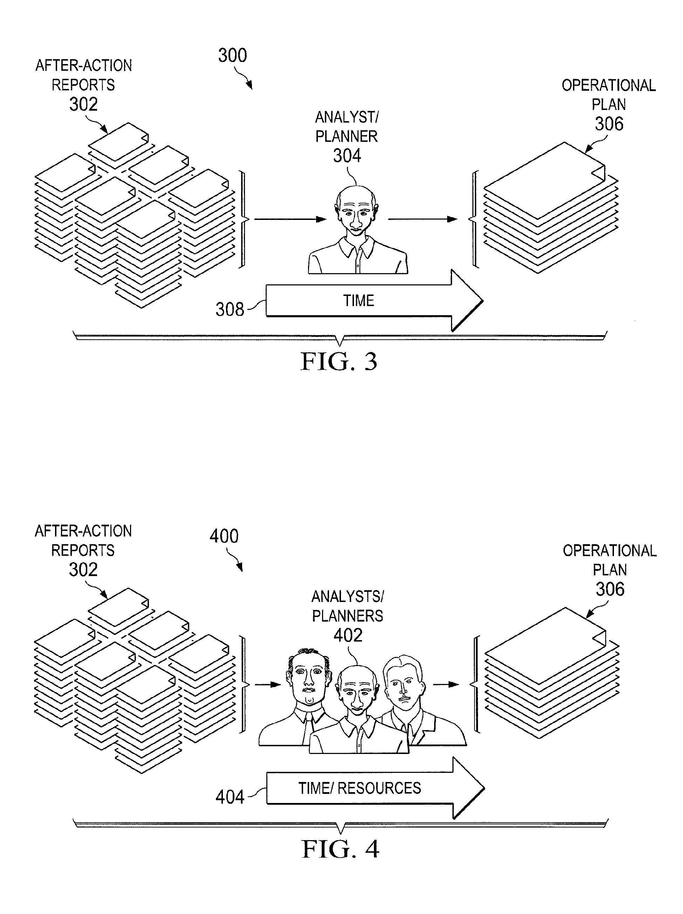

Figure 3 is an illustration of a block diagram illustrating a single analyst preparing an operational plan in accordance with an advantageous embodiment. Figure 4 is an illustration of a block diagram illustrating multiple analysts preparing an operational plan in accordance with an advantageous embodiment. Both Figure 3 and Figure 4 relate to creation of an operational plan based on after-action reports. The processes shown in Figure 3 and Figure 4 may illustrate how the advantageous embodiments may improve upon existing analyst techniques. Reference numerals common to Figure 3 and Figure 4 may refer to similar entities and may have similar functions or properties.

The advantageous embodiments are not limited to generation of operational plans based on after-action reports. For example, the advantageous embodiments may apply to many other fields where some kind of plan, or conclusion, is generated based on bulk data. For example, the advantageous embodiments may apply to generation of a business plan based on a great deal of underlying business data, including but not limited to reports from successful and failed businesses. The advantageous embodiments may also apply to generation of a scientific investigation plan based on underlying measurements and analysis of research papers and perhaps other sources of data. Thus, the advantageous embodiments are not limited to the generation operational plans based on after-action reports. Rather, the particular advantageous embodiments related to operational plans described with respect to Figure 3 and Figure 4 should be considered as non-limiting examples of the advantageous embodiments described herein.

Turning now to operation 300 shown in Figure 3, after-action reports 302 may be one or more reports related to and/or describing actions. An action may be any event, but in a military context an action may be a combat situation. Thus, after-action reports 302 may reflect reports filed by military personnel relating to combat operations. However, after-action reports 302 are not necessarily limited to a military context. For example, after-action reports 302 could also relate to the outcomes of scientific experiments, business ventures, and many others.

After-action reports 302 may be a valuable source of information for strategic planners but, due to the high volume of reports and the unstructured nature of the content, mining and extracting valuable information or knowledge from the data may be tedious and time consuming. Extracting knowledge from after-action reports 302 may require analyst or planner 304 to read through each and every report to find the best, most useful information. Once each report has been read, the useful information is typically aggregated to determine common patterns, situations, and effective approaches for dealing with future or current combat operations. This process may generate operational plan 306. However, generating operational plan 306 may take time 308 and, additionally, may require subject matter expertise to know what information is relevant and should be extracted.

The higher the volume and relevance of after-action reports 302, the more dependable the knowledge derived from after-action reports 302. For example, operational plan 306 may be considered much more viable if operational plan 306 has been proven effective in 100 to 1000 reports or more, versus one or ten reports. That knowledge, however, comes at the expense of time 308 and effort required by analyst or planner 304 to wade through the data to develop operational plan 306. Thus, analyst or planner 304 may often face a dilemma of choosing between reliability and speed when attempting to generate operational plan 306. In combat situations both speed and reliability may be extremely important.

Apart from Web search engine technologies, which return a set of documents based on the keywords entered, other existing solutions are largely manual and require significant time and effort to derive knowledge from a large amount of data. For example, members of an experienced leadership team may gather and leverage their personal experiences to develop operational plan 306. Often, these experiences only come from hundreds of hours in active engagements. Web search engine technologies may be of some aid. However, Web search engines technologies may still require analyst or planner 304 to have subject matter expertise. Additionally, analyst or planner 304 may still have to manually read each document returned, then summarize and aggregate data to create knowledge, and then later develop operational plan 306. Thus, time 308 is often undesirably long.

Another aspect of the reliability versus speed dilemma is how many analysts or planners are assigned to generate operational plan 306, as shown in Figure 3 and Figure 4. In Figure 3, a single analyst or planner 304 generates operational plan 306 based on after-action reports 302. This approach may be efficient in terms of resources expended. This approach might possibly be more reliable, as a single analyst or planner 304 may have all relevant knowledge at the disposal of analyst or planner 304.

Another approach may be operation 400 of Figure 4 in which multiple analysts or planners 402 generate operational plan 306 based on after-action reports 302. When multiple analysts or planners 402 generate operational plan 306, time and resources 404 used to generate operational plan 306 may be reduced. However, the per-person cost for generating operational plan 306 in terms of time and resources 404 may be higher on a pro-rata basis relative to single analyst or planner 304 generating operational plan 306. Thus, operation 400 may be less efficient relative to operation 300.

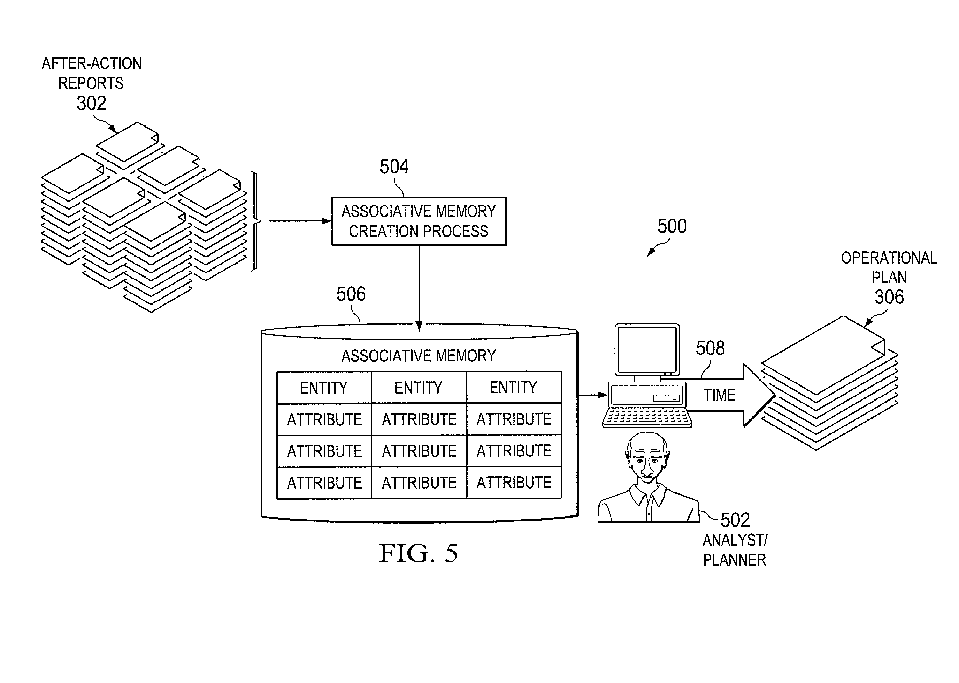

Figure 5 is an illustration of a block diagram of an analyst using an associative memory to prepare an operational plan in accordance with an advantageous embodiment. Elements of the process shown in Figure 5 may be implemented using a system such as system 100 of Figure 1, associative memory 102 of Figure 1, associative memory 1228 of Figure 12, or the insert perspectives described in Figure 1, Figure 12, and elsewhere herein. Certain reference numerals used in Figure 5 may be similar to corresponding reference numerals in Figure 3 and Figure 4 and may refer to similar entities and have similar functions or properties.

Using the advantageous embodiments described herein, process 500 also may involve analyst or planner 502 analyzing after-action reports 302 to generate operational plan 306. Analyst or planner 502 may be a single analyst to increase efficiency, though nothing prevents analyst or planner 502 from representing more than one analyst or planner 502. After associative memory creation process 504 generates associative memory 506, with the creation process performed by analyst or planner 502 or some other user or computer program, analyst or planner 502 may use associative memory 506 to analyze after-action reports 302. For the reasons given below, and above with respect to Figure 1 through Figure 4, use of associative memory 506 to perform the analysis of after-action reports 302 may substantially reduce time 508 and/or resources used to generate operational plan 306.

The advantageous embodiments may reduce time 508 and/or resources used to aggregate and process after action reports 302 or other data used to develop operational plan 306. In particular, the advantageous embodiments may use associative memory 506 coupled with a custom user interface to enable analyst or planner 502 to rapidly develop operational plan 306 for the efficient use of available resources given a particular situation in a theater of operations. The advantageous embodiments may leverage associative memory 506 to rapidly evaluate large volumes of free text data, derive significant intelligence or knowledge, and present the results in such a way that enables analyst or planner 502 to efficiently develop operational plan 306. For example, if an assigned task is to develop an effective operational plan for the setup of a combat outpost in a foreign country, a planner may benefit greatly from knowing what past approaches have succeeded or failed. Such data may exist in the form of after-action reports 302.

Associative memory creation process 504 may involve aggregating disparate data sources that are comprised of lessons learned from the theater of operations. The resulting associative memory 506 may remember entities, their attributes, and the associations or relationships relevant to operational conditions described in after-action reports 302. By identifying the associations and relationships between entities, the ability to uncover patterns and valuable pieces of information becomes a usable asset to analyst or planner 502. Thus, the advantageous embodiments allow a single analyst or planner 502 to rapidly perform a task that would take one or more analysts many hours to perform. This feature may result in the recovery of valuable time. This feature may also reduce the tendency for human error and increase operational efficiency of human resources.

Analyst or planner 502 may use associative memory 506 by entering search terms into an insert perspective, such as described with respect to Figure 1. The resulting output may be presented in a variety of formats, as described elsewhere herein, such as in Figure 1, Figure 2, Figure 4, Figure 7, and Figure 12 through Figure 15. As described with respect to these figures, and elsewhere herein, analyst or planner 502 may generate substantial knowledge about possibly difficult to discover facts or patterns based on after-action reports 302, thereby generating an effective operational plan 306 with a minimum of time 508.

For example, a query may be entered in the form of a perspective or insert perspective. The query may produce a result list of situations associated with the term or terms entered in the query. The result list may be ordered or ranked by the situations that most closely relate to the query. The results may be displayed in the form of a worksheet, such as shown in Figure 15. A user may use the worksheet to see accumulations of information that may indicate where attention should be turned with respect to developing operational plan 306.

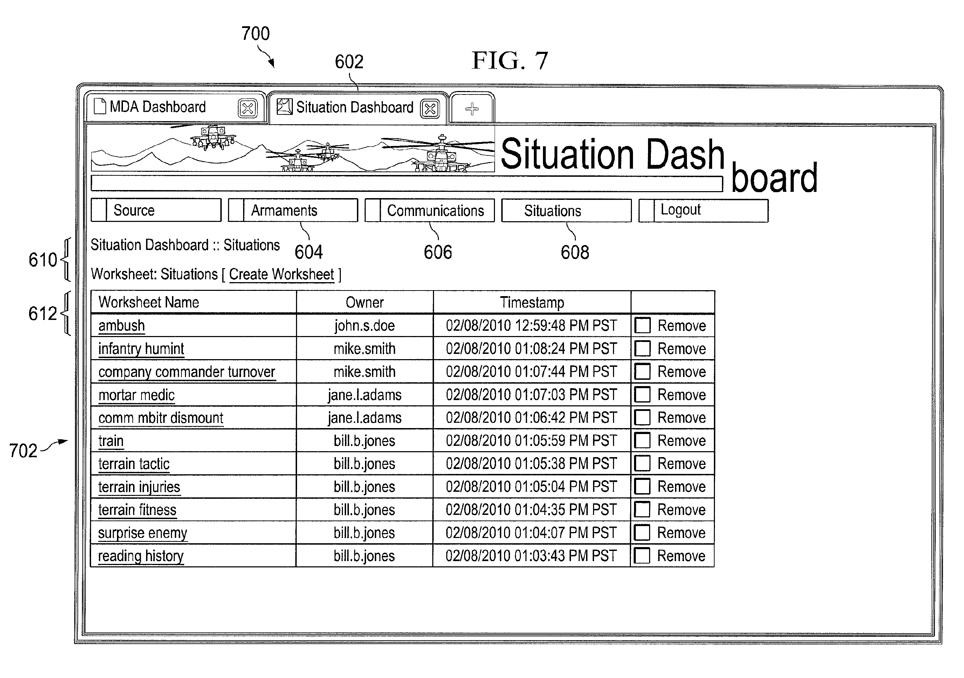

For example, analyst or planner 502 may be tasked with developing operational plan 306 for training troops in a given theater of operations. Analyst or planner 502 may wish to determine which skills are most needed in that theater of operations. To make this determination, instead of manually pouring through after-action reports 302, analyst or planner 502 may use associative memory 506 to search after-action reports 302 for the desired information. Thus, analyst or planner 502 enters search terms such as "skill," "needed," "training," or other relevant search terms into a perspective or insert perspective of associative memory 506. Associative memory 506 is then queried based on these parameters. The query may return a list of associated results, displayed in, for example, a worksheet format as shown in Figure 7 through Figure 10.
In viewing the worksheet, analyst or planner 502 may see the terms "mortar" and "radio" placed first and highlighted. By actuating links to the source documents for the associated results, analyst or planner 502 may quickly discover that the greatest need for training in the given theater of operations is for use of mortars and for use of a particular kind of radio. Analyst or planner 502 may then use this information in generating operational plan 306 for training certain troops in the use of mortars and the particular kind of radio.

Still further, the advantageous embodiments may provide more valuable information that may not have been discovered except through many repeated manual searches or the experience of subject matter experts. For example, through the associations presented in the resulting worksheet, analyst or planner 502 may discover a synergy between use of mortars and the particular kind of radio. For example, training in certain procedures using the radio and using the mortars may lead to more effective results during combat operations. This synergistic effect would not have been discoverable using traditional Web searches, and may not have been at all obvious except in hindsight after many hours of subject matter expert review.

The above example does not limit the advantageous embodiments or the claims. Many other examples are possible.

The advantageous embodiments have additional benefits. For example, the advantageous embodiments may handle unstructured, free text data by breaking the data down into recognizable and comparable units without limiting any data. The advantageous embodiments need not use reductive algorithms or rules like many other data mining techniques. The advantageous embodiments may return a rank-ordered list of similar situations and effective operations relevant to the items contained in the query generated by the user.

The advantageous embodiments may be versatile. The advantageous embodiments may be a valuable tool for any company or governmental entity using databases containing unstructured, free text data. The advantageous embodiments may be adapted to any information domain for which such unstructured, free text data exists. Thus, the advantageous embodiments are not limited to vehicle maintenance or military operations, as some of the examples have described herein.

The advantageous embodiments may be scalable in that the advantageous embodiments may be applied to any size database. The advantageous embodiments may be reusable in that the advantageous embodiments may be applied to a variety of data sources, including text, pictures, symbols, audio, video, or possibly many other kinds of data. The advantageous embodiments may be reusable. The advantageous embodiments may be transferable to any domain.

Thus, the advantageous embodiments may provide for a method for viewing the situational awareness. Information regarding a scenario may be input. Entity analytics may be used within an associative memory technology to produce 'entities'. Entity analytics may be represented using a perspective. A lookup may be performed within the perspective, which may be an insert perspective. Resulting associations may be returned and displayed. Categories of data and links to sources of data may also be displayed. The link source of found information may be selected for comparison of summarized data within an original context of the source data. Decision making may be based on a provided view of events and/or returned results.

Figure 6 through Figure 11 are illustrations of exemplary screenshots of a dashboard for a system for analyzing unstructured data in accordance with an advantageous embodiment. Reference numerals common to Figure 6 through Figure 11 may refer to similar objects having similar properties. The various screenshots shown in Figure 6 through Figure 11 are exemplary only and do not imply any limitations on the claimed inventions. Thus, many variations are possible from the advantageous embodiments shown in Figure 6 through Figure 11. The screenshots shown in Figure 6 through Figure 11 may be implemented using a system such as system 100 of Figure 1, data processing system 1200 of Figure 12, or other hardware or software. The advantageous embodiments described with respect to Figure 6 through Figure 11 may also be examples of implementation of the techniques described with respect to Figure 2 through Figure 5. The exemplary data shown in Figure 6 through Figure 11 is unclassified and is public knowledge.

In an advantageous embodiment, screenshot 600 shows an example of the advantageous embodiments described with respect to Figure 1 through Figure 6 in use. In this advantageous embodiment, screenshot 600 shows tab 602, which shows a situation dashboard. The purpose of the situation dashboard shown in tab 602 is to quickly present information to a user and to prompt a user for input, such as a query, specification of source data, and other possible inputs.

Tab 602 shows a number of sub-tabs including a number of perspectives, including armaments perspective 604, communications perspective 606, and situations perspective 608. In addition, tab 602 also includes navigation information 610 for indicating where the user is with respect to use of the dashboard. In this case, navigation information 610 shows that the user is looking at the source(s) of data being investigated.

Again, as described above, a "perspective" may be a "point of view". With respect to an associative memory, a perspective may be a choice of a context for a particular aspect of a user's domain. As used herein, an "insert perspective" is a type of perspective that may be fed back into an associative memory, and which may be viewable from other perspectives as a possible resource. Any of armaments perspective 604, communications perspective 606, or situations perspective 608 may be either a perspective or an insert perspective.

Navigation information 610 may indicate the current configuration of the source. As shown, the source may be various United States Army unclassified after-action reports from operations in Afghanistan. Worksheet 612 may indicate additional information about navigation information 610, which in this case includes the source(s).

Figure 7 is an illustration of an exemplary screenshot of a dashboard for a system for analyzing unstructured data in accordance with an advantageous embodiment. Figure 7 shows a next step in a process of using the situation dashboard as an aid for preparing an operational plan. In the case at hand, screenshot 700 shows a worksheet function for situations perspective 608. Situations perspective 608 is shown as a tab on screenshot 700. Worksheet 612 shows a list of comparable units of data that are related to various situations such as, but not limited to, ambush situations, training situations, terrain fitness situations, and other situations. Each comparable unit of data is a group of data that in some way relates to the title given to the comparable unit. Again, for example, "train" 702 may be a comparable unit of data that includes many individual after-action reports that relate to training in a military context. These comparable units may be saved, retained, and used again. Comparable units of data also may be re-entered into the associative memory in order to create additional relationships that can be searched or otherwise used by the associative memory.

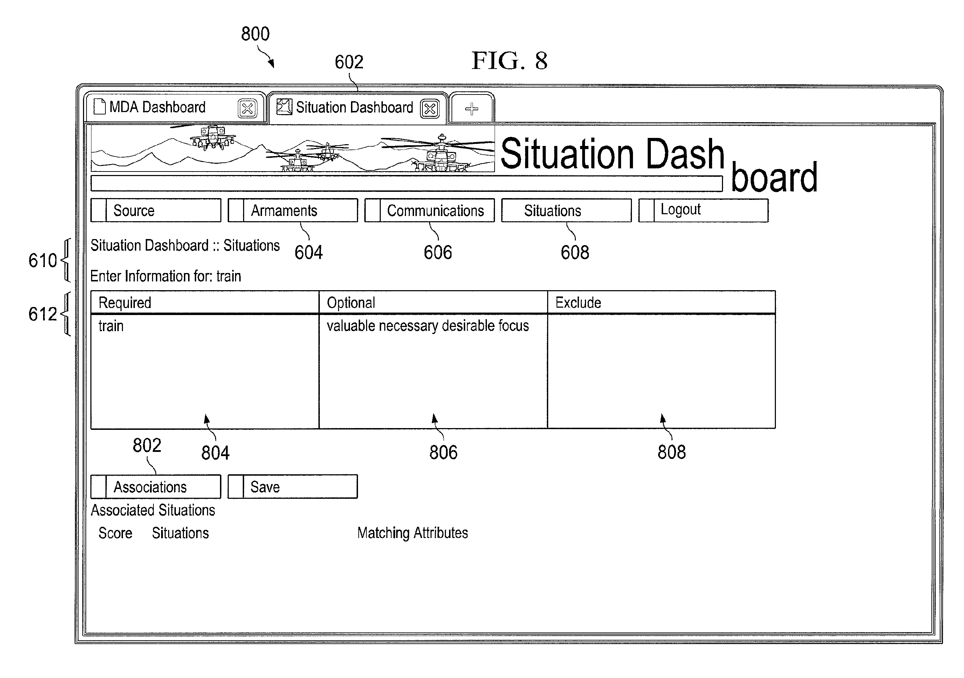

In the case at hand, the analyst or planner may be interested in the "train" comparable unit, as indicated by "train" 702. Further information about comparable unit "train" 702 is described with respect to Figure 8.

Figure 8 is an illustration of an exemplary screenshot of a dashboard for a system for analyzing unstructured data in accordance with an advantageous embodiment. Figure 8 shows a next step in a process of using the situation dashboard as an aid for preparing an operational plan. Screenshot 800 relates to a worksheet function for situations perspective 608. In this case, the analyst or planner is interested in the comparable unit of data "train" 702 in Figure 7. Note that any given comparable unit of data may itself be composed of other comparable units of data such that more detailed comparisons or searches may be performed.

In the advantageous embodiment shown in Figure 8, the user has a large set of free text data from which to derive what is considered to be the most important training needed to be implemented before deploying a unit to Afghanistan. Selecting "associations" tab 802 will produce results of associated situations, or paragraphs, related to comparable unit of data "train" 702 of Figure 7.

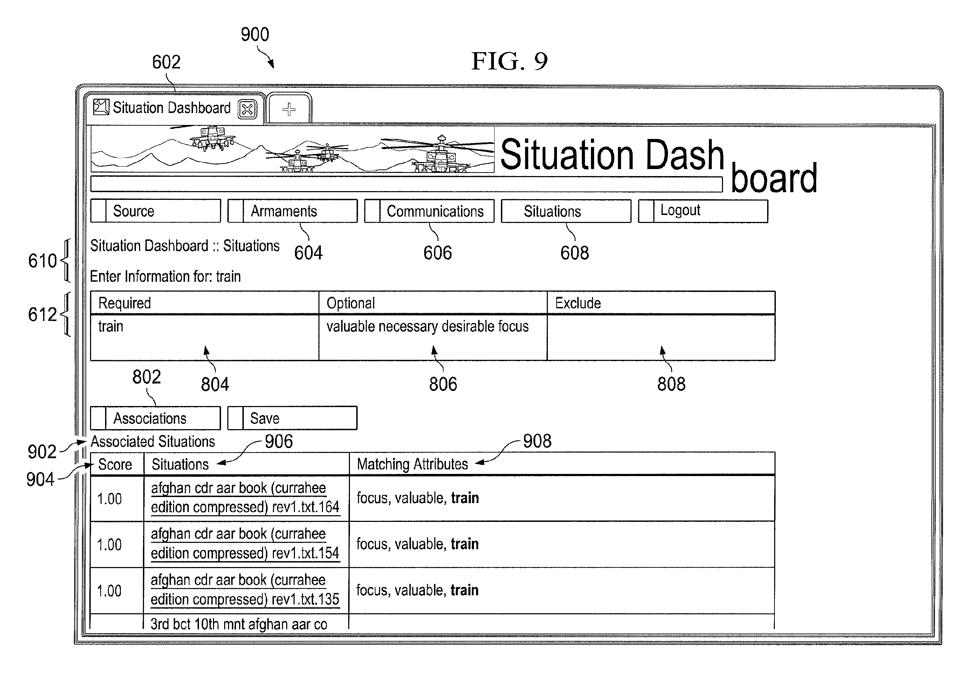

Navigation information 610 informs the user that the user is at "situation dashboard:: situations". The user is then prompted to input information at worksheet 612. The user may specify the query according to various parameters, including required search parameters 804, optional search parameters 806, and excluded search parameters 808. In the case at hand, the user has entered "train" in required search parameters 804 and has entered "valuable, necessary, desirable," and "focus" in optional search parameters 806. Figure 9 shows results of the search after the query with the various search parameters is executed.

Figure 9 is an illustration of an exemplary screenshot of a dashboard for a system for analyzing unstructured data in accordance with an advantageous embodiment. Figure 9 shows a next step in a process of using the situation dashboard as an aid for preparing an operational plan.

The results of the query described with respect to Figure 8 are shown in screenshot 900. Specifically, screenshot 900 shows list of associated situations 902. List of associated situations 902 includes a number of columns, which may be varied from those shown. In the advantageous embodiment shown in Figure 9, list of associated situations 902 includes score 904, situations 906, and matching attributes 908. Score 904 indicates a relevance of the search result to the query. Situations 906 indicate various data sources, including possibly specific after-action reports. Matching attributes 908 indicate which search terms were found in the corresponding sources.

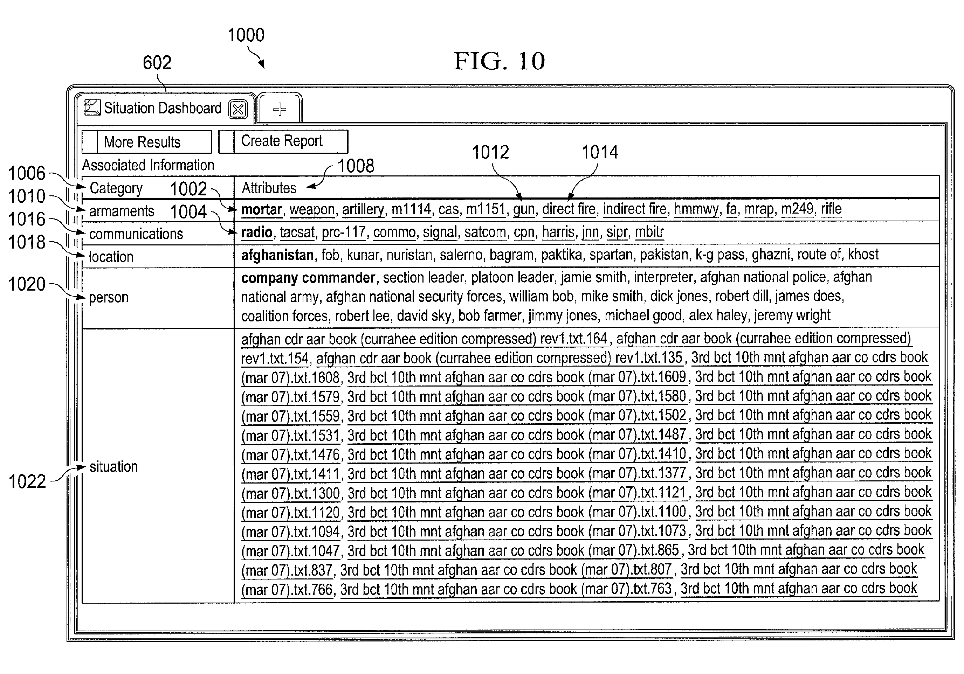

Figure 10 is an illustration of an exemplary screenshot of a dashboard for a system for analyzing unstructured data in accordance with an advantageous embodiment. Figure 10 shows a next step in a process of using the situation dashboard as an aid for preparing an operational plan.

As shown in Figure 10, pulling down past associated situations links may lead to associated information. For example, by selecting the link "train" from matching attributes 908 in Figure 9 a planner or analyst may pull up screenshot 1000 of Figure 10. In screenshot 1000 the user can see, with only the initial click that initiated the worksheet query, that the single most important training to accomplish is with "mortar" 1002 and "tacsat radio" 1004. It might have been impractical, overly time consuming, or even impossible to learn this information if the user had to read all sources cited.

Other information may be displayed in screenshot 1000, as shown in Figure 10. For example, the worksheet shown in screenshot 1000 may display category column 1006 and attributes column 1008. Each listed category may be comparable units of information. Thus, for example, armaments 1010 may be a category of groups of different kinds of weapons. Comparable units of different kinds of weapons are shown in attributes column 1008, which may include, for example, "mortar" 1002. "Mortar" 1002 may be bolded, underlined, presented with enlarged font, or highlighted in other ways to indicate that "mortar" 1002 appears a highest number of times within the searched after-action reports and/or other data sources.

Kinds of weapons need not be limited to specific weapon types, but may relate to groups of weapons. For example, armaments 1010 may also have other matching attributes such as, but not limited to, "gun" 1012 or "direct fire" 1014.

Likewise, multiple categories of different ontological abstract levels may be present. For example, categories such as communications 1016, location 1018, and person 1020 may be present. Communications 1016 may show which kinds of communications equipment for which more training is desirable, as shown in attributes column 1008. Location 1018 may show in which locations training is more desirable. Person 1020 may show which types of persons should receive additional training.

Screenshot 1000 may show other information. For example, situation 1022 may show individual after-action reports in which requests for more training were present, or in which it may be apparent to a user that more training may be desirable. Screenshot 1000 may include yet further information; thus, the advantageous embodiments are not limited to the example described with respect to Figure 10.

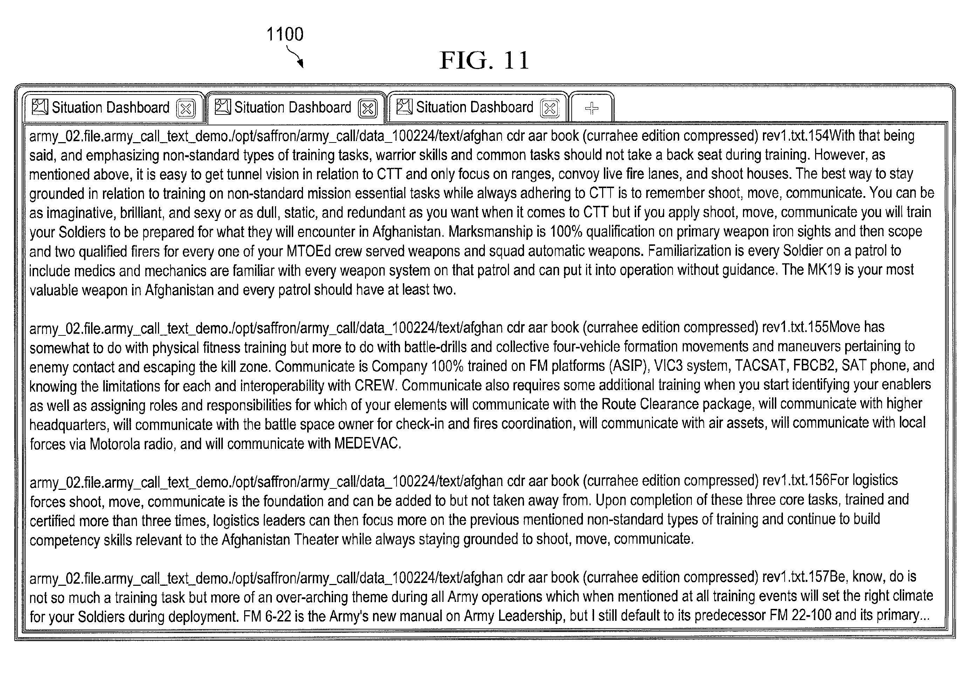

Figure 11 is an illustration of an exemplary screenshot of a dashboard for a system for analyzing unstructured data in accordance with an advantageous embodiment. Figure 11 shows a next step in a process of using the situation dashboard as an aid for preparing an operational plan. Screenshot 1100 shows that a user may drill down to individual after-action reports or other sources of data in order to review specific data sources. As shown in screenshot 1100, individual search terms may be highlighted in order to draw the user's attention to portions of the data sources that may contain information of most relevance to the query.

Individual reports may be called up by activating links shown in screenshot 1000 of Figure 10 such as, but not limited to, "mortar" 1002 or "tacsat radio" 1004. Activating a link such as "mortar" 1002 may call up some or all after-action reports or other data sources from which the system decided that "mortar" 1002 had the most number of hits with respect to the query. Individual after-action reports or other data sources may be called up, such as by activating any of the links shown in situation 1022 of Figure 10. In this manner, a planner, analyst, or other user may find the most relevant after-action reports or other data sources quickly and efficiently. Accordingly, the user may be able to more quickly find desired information and hence more quickly formulate an operational plan.

The advantageous embodiments are not limited to the screenshots and examples described with respect to Figure 6 through Figure 11, or to Figure 1 through Figure 5, but may be modified or supplemented. For example, a system implementing the advantageous embodiments may further include hardware or software for aiding the user to create an operational plan. The information found using the techniques described herein may be input into such additional hardware or software for manipulation, use, or reference by the user. For example, once the user has discovered that additional training in mortars and tacsat radio is desirable in the Afghanistan theater of operations, the advantageous embodiments may input this information to automatically create a preliminary operational plan which would implement such training. The user could then modify and finalize the preliminary operational plan quickly and efficiently. Other variations are possible.

Thus, the advantageous embodiments provide for a system for analyzing unstructured data. The system includes an associative memory including a plurality of data in associated units having a plurality of associations. The associative memory may be configured to be queried based on at least one relationship selected from the group that includes direct relationships and indirect relationships among the plurality of data. The associative memory further includes a content-addressable structure that maps input patterns in the plurality of data to output patterns in the plurality of data. The system also includes an analyzer in communication with the associative memory wherein the analyzer is configured to parse and arrange the plurality of data into comparable units in response to a query. The analyzer may be configured to establish an ordered list ranking the comparable units in an order of precedence based on the query.

The advantageous embodiments also contemplate using the ordered list ranking to create operational plans, including military operational plans. Thus, the advantageous embodiments may provide a fast and efficient system for obtaining information used to make quick decisions and to formulate operational plans quickly and efficiently. The advantageous embodiments may perform multiple entity analytic tasks and display all of the results in one location on a display. The advantageous embodiments need not be domain specific. The advantageous embodiments may be platform independent and portable. The advantageous embodiments may be flexible in that the advantageous embodiments may allow users to save and remove worksheets. The advantageous embodiments are not limited to the above illustrations and descriptions.

Turning now to Figure 12, an illustration of a data processing system is depicted in accordance with an advantageous embodiment. Data processing system 1200 in Figure 12 is an example of a data processing system that may be used to implement the advantageous embodiments, such as system 100 of Figure 1, or any other module or system or process disclosed herein. In this illustrative example, data processing system 1200 includes communications fabric 1202, which provides communications between processor unit 1204, memory 1206, persistent storage 1208, communications unit 1210, input/output (I/O) unit 1212, display 1214, and associative memory 1228. Processor unit 1204 may be characterized as a "physical processor" in that processor unit 1204 may be a non-transitory processor.

Associative memory 1228 may be associative memory 102 of Figure 1. Associative memory 1228 need not be in direct communication with communications fabric 1202. For example, associative memory 1228 may exchange data with processor unit 1204 and/or memory 1206 via communications unit 1210, such as when associative memory 1228 is physically located in a remote location relative to data processing system 1200.

Data processing system 1200 also may include output unit 1230 and/or analyzer 1232. Output unit 1230 may be output unit 140 of Figure 1. Analyzer 1232 may be analyzer 122 of Figure 1. In an advantageous embodiment, analyzer 1232 may be processor unit 1204. In an advantageous embodiment, output unit 1230 may be display 1214.
Processor unit 1204 serves to execute instructions for software that may be loaded into memory 1206. Processor unit 1204 may be a number of processors, a multi-processor core, or some other type of processor, depending on the particular implementation. "A number," as used herein with reference to an item, means one or more items. Further, processor unit 1204 may be implemented using a number of heterogeneous processor systems in which a main processor is present with secondary processors on a single chip. As another illustrative example, processor unit 1204 may be a symmetric multi-processor system containing multiple processors of the same type.

Memory 1206 and persistent storage 1208 are examples of storage devices 1216. A storage device is any piece of hardware that is capable of storing information, such as, for example, without limitation, data, program code in functional form, and/or other suitable information either on a temporary basis and/or a permanent basis. Storage devices 1216 may also be referred to as computer readable storage devices in these examples. Memory 1206, in these examples, may be, for example, a random access memory or any other suitable volatile or non-volatile storage device. Persistent storage 1208 may take various forms, depending on the particular implementation.

For example, persistent storage 1208 may contain one or more components or devices. For example, persistent storage 1208 may be a hard drive, a flash memory, a rewritable optical disk, a rewritable magnetic tape, or some combination of the above. The media used by persistent storage 1208 also may be removable. For example, a removable hard drive may be used for persistent storage 1208.

Communications unit 1210, in these examples, provides for communications with other data processing systems or devices. In these examples, communications unit 1210 is a network interface card. Communications unit 1210 may provide communications through the use of either or both physical and wireless communications links.

Input/output unit 1212 allows for input and output of data with other devices that may be connected to data processing system 1200. For example, input/output unit 1212 may provide a connection for user input through a keyboard, a mouse, and/or some other suitable input device. Further, input/output unit 1212 may send output to a printer. Display 1214 provides a mechanism to display information to a user.

Instructions for the operating system, applications, and/or programs may be located in storage devices 1216, which are in communication with processor unit 1204 through communications fabric 1202. In these illustrative examples, the instructions are in a functional form on persistent storage 1208. These instructions may be loaded into memory 1206 for execution by processor unit 1204. The processes of the different embodiments may be performed by processor unit 1204 using computer implemented instructions, which may be located in a memory, such as memory 1206.

These instructions are referred to as program code, computer usable program code, or computer readable program code that may be read and executed by a processor in processor unit 1204. The program code in the different embodiments may be embodied on different physical or computer readable storage media, such as memory 1206 or persistent storage 1208.

Program code 1218 is located in a functional form on computer readable media 1220 that is selectively removable and may be loaded onto or transferred to data processing system 1200 for execution by processor unit 1204. Program code 1218 and computer readable media 1220 form computer program product 1222 in these examples. In one example, computer readable media 1220 may be computer readable storage media 1224 or computer readable signal media 1226. Computer readable storage media 1224 may include, for example, an optical or magnetic disk that is inserted or placed into a drive or other device that is part of persistent storage 1208 for transfer onto a storage device, such as a hard drive, that is part of persistent storage 1208. Computer readable storage media 1224 also may take the form of a persistent storage, such as a hard drive, a thumb drive, or a flash memory, that is connected to data processing system 1200. In some instances, computer readable storage media 1224 may not be removable from data processing system 1200.

Alternatively, program code 1218 may be transferred to data processing system 1200 using computer readable signal media 1226. Computer readable signal media 1226 may be, for example, a propagated data signal containing program code 1218. For example, computer readable signal media 1226 may be an electromagnetic signal, an optical signal, and/or any other suitable type of signal. These signals may be transmitted over communications links, such as wireless communications links, optical fiber cable, coaxial cable, a wire, and/or any other suitable type of communications link. In other words, the communications link and/or the connection may be physical or wireless in the illustrative examples.

In some advantageous embodiments, program code 1218 may be downloaded over a network to persistent storage 1208 from another device or data processing system through computer readable signal media 1226 for use within data processing system 1200. For instance, program code stored in a computer readable storage medium in a server data processing system may be downloaded over a network from the server to data processing system 1200. The data processing system providing program code 1218 may be a server computer, a client computer, or some other device capable of storing and transmitting program code 1218.

The different components illustrated for data processing system 1200 are not meant to provide architectural limitations to the manner in which different embodiments may be implemented. The different advantageous embodiments may be implemented in a data processing system including components in addition to and/or in place of those illustrated for data processing system 1200. Other components shown in Figure 12 can be varied from the illustrative examples shown. The different embodiments may be implemented using any hardware device or system capable of running a program code. As one example, the data processing system may include organic components integrated with inorganic components and/or may be comprised entirely of organic components excluding a human being. For example, a storage device may be comprised of an organic semiconductor.

In another illustrative example, processor unit 1204 may take the form of a hardware unit that has circuits that are manufactured or configured for a particular use. This type of hardware may perform operations without needing a program code to be loaded into a memory from a storage device to be configured to perform the operations.

For example, when processor unit 1204 takes the form of a hardware unit, processor unit 1204 may be a circuit system, an application specific integrated circuit (ASIC), a programmable logic device, or some other suitable type of hardware configured to perform a number of operations. With a programmable logic device, the device is configured to perform the number of operations. The device may be reconfigured at a later time or may be permanently configured to perform the number of operations. Examples of programmable logic devices include, for example, a programmable logic array, programmable array logic, a field programmable logic array, a field programmable gate array, and other suitable hardware devices. With this type of implementation, program code 1218 may be omitted because the processes for the different embodiments are implemented in a hardware unit.

In still another illustrative example, processor unit 1204 may be implemented using a combination of processors found in computers and hardware units. Processor unit 1204 may have a number of hardware units and a number of processors that are configured to run program code 1218. With this depicted example, some of the processes may be implemented in the number of hardware units, while other processes may be implemented in the number of processors.
As another example, a storage device in data processing system 1200 is any hardware apparatus that may store data. Memory 1206, persistent storage 1208, and computer readable media 1220 are examples of storage devices in a tangible form.

In another example, a bus system may be used to implement communications fabric 1202 and may be comprised of one or more buses, such as a system bus or an input/output bus. Of course, the bus system may be implemented using any suitable type of architecture that provides for a transfer of data between different components or devices attached to the bus system. Additionally, a communications unit may include one or more devices used to transmit and receive data, such as a modem or a network adapter. Further, a memory may be, for example, memory 1206, or a cache, such as found in an interface and memory controller hub that may be present in communications fabric 1202.

The different advantageous embodiments can take the form of an entirely hardware embodiment, an entirely software embodiment, or an embodiment containing both hardware and software elements. Some embodiments are implemented in software, which includes but is not limited to forms such as, for example, firmware, resident software, and microcode.

Furthermore, the different embodiments can take the form of a computer program product accessible from a computer usable or computer readable medium providing a program code for use by or in connection with a computer or any device or system that executes instructions. For the purposes of this disclosure, a computer-usable or computer readable medium can generally be any tangible apparatus that can contain, store, communicate, propagate, or transport the program for use by or in connection with the instruction execution system, apparatus, or device.

The computer usable or computer readable medium can be, for example, without limitation, an electronic, magnetic, optical, electromagnetic, infrared, or semiconductor system, or a propagation medium. Non limiting examples of a computer readable medium include a semiconductor or solid state memory, magnetic tape, a removable computer diskette, a random access memory (RAM), a read-only memory (ROM), a rigid magnetic disk, and an optical disk. Optical disks may include compact disk - read only memory (CD-ROM), compact disk - read/write (CD-R/W) and DVD.

Further, a computer usable or computer readable medium may contain or store a computer readable or usable program code such that when the computer readable or usable program code is executed on a computer, the execution of this computer readable or usable program code causes the computer to transmit another computer readable or usable program code over a communications link. This communications link may use a medium that is, for example, without limitation, physical or wireless.

A data processing system suitable for storing and/or executing computer readable or computer usable program code will include one or more processors coupled directly or indirectly to memory elements through a communications fabric, such as a system bus. The memory elements may include local memory employed during actual execution of the program code, bulk storage, and cache memories which provide temporary storage of at least some computer readable or computer usable program code to reduce the number of times the code may be retrieved from bulk storage during execution of the code.

Input/output or I/O devices can be coupled to the system either directly or through intervening I/O controllers. These devices may include, for example, without limitation, keyboards, touch screen displays, and pointing devices. Different communications adapters may also be coupled to the system to enable the data processing system to become coupled to other data processing systems or remote printers or storage devices through intervening private or public networks. Non-limiting examples are modems and network adapters as just a few of the currently available types of communications adapters.

Thus, the advantageous embodiments address the issue of finding relationships in a vast plurality of data in order to make specific decisions regarding particular situations. The advantageous embodiments utilize associative memory technology to perform such tasks.

The description of the different advantageous embodiments has been presented for purposes of illustration and description, and is not intended to be exhaustive or limited to the embodiments in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the embodiments, the practical application, and to enable others of ordinary skill in the art to understand the disclosure for various embodiments with various modifications as are suited to the particular use contemplated.

## Claims

1. A system (100) for analyzing unstructured data, comprising:
an associative memory (102) including a plurality of data (104) having a plurality of associations (106);
wherein the plurality of data is collected into associated units of data (108);
wherein the associative memory (102) is configured to be queried based on at least one relationship selected from the group that includes direct relationships (114) and indirect relationships (116) among the plurality of data (104);
wherein the associative memory (102) further includes a content-addressable structure (118);
an analyzer (122) in communication with the associative 20 memory (102),
wherein the analyzer is configured to parse and arrange the plurality of data (104) into comparable units (124, 126, 128) in response to a query (120); and
wherein the analyzer (122) is configured to establish an ordered list (130) ranking the comparable units (124, 25 126, 128) in an order of precedence based on the query (120).

2. The system (100) of claim 1, wherein the plurality of data (104) includes at least one of the unstructured data (132) and free text data (134) and wherein the analyzer (122) is further configured to parse and arrange the plurality of data (104) into the comparable units (124, 126, 128) such that the comparable units (124, 126, 128) are recognizable to a human user.

3. The system (100) of claim 1 or 2 further comprising: the analyzer (122) being configured to establish the ordered list (130) to rank a first comparable unit to have a highest number of associations responsive to the query.

4. The system (100) of claim 1, 2 or 3, wherein the analyzer (122) is configured to receive the query (120) from an insert perspective (138) of the associative memory (102).

5. The system (100) of any of claims 1 to 4 further comprising:
an output unit (140) configured to generate a set of links linking the comparable units (124, 126, 128) to underlying data that compose the comparable units (124, 126, 128).

6. The system (100) of any of claims 1 to 5, further comprising:
a display unit (142) in communication with the output unit (140), wherein the display unit (142) is configured to 20 display the ordered list (130), wherein the output unit (140) is further configured to cause the display unit (142) to display the ordered list (130) as a dashboard (144); and
wherein the dashboard (144) comprises a plurality of perspectives from which to understand the plurality of data (104).

7. The system (100) of any of claims 1 to 6, wherein the dashboard (144) comprises a plurality of categories organized in a first column and a plurality of attributes organized in a second column, and wherein rows across the first column and the second column comprise sets of attributes, in the plurality of attributes, that correspond to particular category entries in the plurality of categories.

8. A device comprising:
a physical processor;
a bus connected to the physical processor;
an associative memory (102) connected to the bus, wherein the associative memory (102) is non-transitory, wherein the associative memory (102) includes a plurality of data (104) having a plurality of associations (106), wherein the plurality of data (104) is collected into associated units of data (108), wherein the associative memory (102) is configured to be queried based on at least one relationship selected from the group that includes direct relationships (114) and indirect relationships (116) among the plurality of data (104), and wherein the associative memory (102) further includes a content-addressable structure (118);
wherein the physical processor is configured to parse and arrange the plurality of data (104) into comparable units (124, 126, 128) in response to a query (120); and
wherein the physical processor is configured to establish an ordered list (130) ranking of the comparable units (124, 126, 128) in an order of precedence based on the query (120).

9. The device of claim 8 further comprising:
a display unit (142) in communication with the physical processor, the display unit (142) configured to display the ordered list (130), wherein the physical processor is further configured to cause the display unit (142) to display the ordered list (130) as a dashboard (144); and
wherein the dashboard (144) comprises a plurality of perspectives from which to understand the plurality of data (104).

10. The device of claim 8 or 9, wherein the dashboard (144) comprises a plurality of categories organized in a first column and a plurality of attributes organized in a second column, and wherein rows across the first column and the second column comprise sets of attributes, in the plurality of attributes, that correspond to particular category entries in the plurality of categories, wherein the dashboard (144) is configured to highlight a first attribute in a particular set of attributes, and wherein the first attribute indicates groups of data of highest relevance to the query (120).
